(19) Europäisches Patentamt
European Patent Office
Office européen des brevets

(11) **EP 2 952 047 B1**

(12) **EUROPEAN PATENT SPECIFICATION**

(45) Date of publication and mention
of the grant of the patent:
**02.08.2017 Bulletin 2017/31**

(51) Int Cl.:
***H04W 64/00*** (2009.01)      ***G01S 5/02*** (2010.01)
***H04W 4/02*** (2009.01)

(21) Application number: **14765725.8**

(86) International application number:
**PCT/CN2014/073362**

(22) Date of filing: **13.03.2014**

(87) International publication number:
**WO 2014/139446 (18.09.2014 Gazette 2014/38)**

(54) **METHOD FOR LOCALIZING WIRELESS DEVICES**

VERFAHREN ZUR ORTUNG DRAHTLOSER VORRICHTUNGEN

PROCÉDÉ POUR LA LOCALISATION DE DISPOSITIFS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2013 US 201361780328 P**
**14.02.2014 US 201414180992**

(43) Date of publication of application:
**09.12.2015 Bulletin 2015/50**

(73) Proprietor: **Huawei Technologies Co., Ltd.**
**Longgang District**
**Shenzhen, Guangdong 518129 (CN)**

(72) Inventors:
• **ALFALUJAH, Lyad**
**Shenzen, Guangdong 518129 (CN)**
• **DUSHYANTHAN, Kamalaharan**
**Metuchen, New Jersey 08840 (US)**
• **DAS, Suman**
**Colonia, New Jersey 07067 (US)**
• **NEWBURY, Mark**
**Hillsborough, New Jersey 08844 (US)**

(74) Representative: **Maiwald Patentanwalts GmbH**
**Elisenhof**
**Elisenstrasse 3**
**80335 München (DE)**

(56) References cited:
**WO-A1-2009/133287      WO-A1-2012/149663**
**CN-A- 101 572 856      CN-A- 101 873 607**
**CN-A- 102 116 858      US-A1- 2005 122 252**
**US-A1- 2008 293 435      US-A1- 2013 035 109**
**US-B1- 8 385 943      US-B2- 7 346 359**

• **FILIPE MENESES ET AL: "Using GSM CellID Positioning for Place Discovering", PERVASIVE HEALTH CONFERENCE AND WORKSHOPS, 2006, IEEE, PI, 1 November 2006 (2006-11-01), pages 1-8, XP031089338, ISBN: 978-1-4244-1085-9**

**Description**

TECHNICAL FIELD

The present invention relates generally to a system and method for wireless technology, and, in particular embodiments, to a system and method for localizing wireless devices.

BACKGROUND

The ability to localize (i.e., identify the location) wireless devices within a wireless service provider (WSP) service area enables services such as the ability of the WSP to direct emergency personnel to the correct location upon receipt of a wireless emergency services call (e.g., "911" in US). Also, the ability to localize wireless devices enables location based services (LBS), for which knowledge of user location can enhance the value and relevancy of data delivered to the user, such as weather, nearby restaurants or shops, and navigation information. Also, knowledge of high resolution special traffic densities allows for optimized network engineering, including placement of new cells directly in areas of localized traffic demand, to assist in locating and handling network problems, and in optimizing networks.

Localization and density information concerning wireless devices may be estimated using global positioning satellite (GPS) based methods and fingerprinting based methods. GPS based methods rely on the use of GPS receivers within wireless devices. With clear visibility of the satellite constellation, a GPS receiver can gather data that allows computation of the wireless device's location, which may be reported to the network. The individual localizations can be collected from many devices and aggregated over time into spatial traffic densities.

In fingerprinting methods, a radio map of the entire service area is constructed. The radio map is then used to localize wireless devices based on routine radio channel information transmitted by the devices to the network. This routine radio information does not contain GPS information. Localization is achieved by mapping the information reported to a specific location on the radio map.

US 2013/035 109 A1 discloses a method to construct a radio map by means of measurement data obtained from a plurality of fixed receivers. During a training phase, the signal strengths with which a signal from one user equipment reaches all fixed receivers is stored in a database together with the known reference location of the user equipment as a RF fingerprint of this reference location. After the training phase, said signal strengths are measured again, and it is determined which record in the database is matched closest by the set of signal strengths. The location associated with this record is deemed to be the location of the user equipment.

US 2005/122 252 A1 discloses a local positioning system where a wireless device sends out short RF signals and records the waveforms of echo signals reflected from structures in the vicinity of the device. In a training phase, these waveforms are recorded at known reference locations, and the waveforms and their associated reference locations are input into a neural network. After the training phase, waveforms are recorded and used to query the neural network, which returns the desired location.

(F. Meneses, A. Moreira, "Using GSM CellID Positioning for Place Discovering", Pervasive Health Conference and Workshops, IEEE, PI, pages 1-8, ISBN 978-1-4244-1085-9 (2006)) discloses to discover places that are of interest to a mobile equipment user from the pattern of handovers of the mobile equipment between cells. At each place, the mobile equipment will either keep camping on the same cell, or keep changing back and forth between a characteristic list of cells.

US 8,385,943 B1 discloses a further method to construct a radio map that is specifically tuned to determining the position of mobile devices in multi-storey buildings. In the training phase, the mobile device is brought to a pattern of reference locations, and at each reference location, it records and reports the MAC addresses of all wireless access points it can receive, together with the signal strengths. The information is collected in a radio map. After the training phase, the mobile device reports MAC addresses and signal strengths from an unknown location in the building, and a comparison with the information in the database yields the probability of the mobile device being located at each of the reference locations.

SUMMARY OF THE INVENTION

An embodiment method of constructing a database for localizing wireless devices includes receiving, by a first network element, a plurality of records from a second network element and determining a first segment. Also, the method includes assigning a first drive test record of the plurality of records to the first segment and determining a second segment, where a first area of the first segment is not equal to a second area of the second segment. Additionally, the method includes assigning a second drive test record of the plurality of records to the second segment. Each drive test record includes at least a location and a cell identification, ID, of the serving cell.

The method further comprises, for each drive test record:

computing a distance between said location and the serving cell;

determining whether the distance is between a pre-set minimum distance and a pre-set maximum distance; and

if the distance is less than the minimum distance or greater than the maximum distance, discarding the drive test record.

An embodiment method of constructing a density map of wireless device density includes receiving, by a network element, a plurality of measurement reports, obtaining drive test records assigned to segments from a database constructed according to the invention, and obtaining a plurality of fingerprints from said drive test records. Also, the method includes calculating a plurality of distances between a first measurement report of the plurality of measurement reports and the plurality of fingerprints, where a minimum distance of the plurality of distances is a first distance between the first measurement report and a first fingerprint of the plurality of fingerprints, and where a second smallest distance of the plurality of distances is a second distance between the first measurement report and a second fingerprint of the plurality of fingerprints. Additionally, the method includes allocating a first fraction of the first measurement report to a first segment corresponding to the first fingerprint and allocating a second fraction of the first measurement report to a second segment corresponding to the second fingerprint.

An embodiment method of constructing an estimated user density not presently claimed including obtaining, by a network element, a plurality of estimated user locations and mapping the plurality of estimated user locations to produce the estimated user density.

An embodiment system for localizing wireless devices not presently claimed includes a processor and a computer readable storage medium storing programming for execution by the processor. The programming includes instructions to receive a plurality of records from a node and determine a first segment. Also, the programming includes instructions to assign a first drive test record of the plurality of records to the first segment and determine a second segment, where a first area of the first segment is not equal to a second area of the second segment. Additionally, the programming includes instructions to assign a second drive test record of the plurality of records to the second segment.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

BRIEF DESCRIPTION OF THE DRAWINGS

For a more complete understanding of the present invention, and the advantages thereof, reference is now made to the following descriptions taken in conjunction with the accompanying drawing, in which:

Figure 1 illustrates an embodiment system for fingerprinting;

Figure 2 illustrates another embodiment system for fingerprinting;

Figure 3 illustrates wireless hotspots;

Figure 4 illustrates an embodiment method for localization and traffic density estimation;

Figures 5A-B illustrate an embodiment method of context filtering;

Figures 6A-B illustrate drive test data;

Figure 7 illustrates drive test data;

Figure 8 illustrates drive test data with duplicate cell IDs removed;

Figure 9 illustrates drive test data before a vector transformation;

Figure 10 illustrates drive test data after a vector transformation;

Figure 11 illustrates drive test data grouped by location;

Figure 12 illustrates segments for fingerprinting;

Figure 13 illustrates additional segments for fingerprinting;

Figure 14 illustrates an embodiment map of segments;

Figure 15 illustrates an embodiment method of determining segments;

Figure 16 illustrates an embodiment method of determining a radio map;

Figure 17 illustrates an embodiment method of allocating measurement reports to segments;

Figure 18 illustrates a conceptual mapping for soft decision making;

Figure 19 illustrates an embodiment implementation of soft decision making;

Figure 20 illustrates a map of true wireless device density;

Figure 21 illustrates an embodiment map of true wireless device density and estimated wireless device density; and

Figure 22 illustrates a block diagram of an embodiment of a general-purpose computer system.

Corresponding numerals and symbols in the different figures generally refer to corresponding parts unless otherwise indicated. The figures are drawn to clearly illustrate the relevant aspects of the embodiments and are not necessarily drawn to scale.

DETAILED DESCRIPTION OF ILLUSTRATIVE EMBODIMENTS

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

In fingerprinting, a radio map encompasses a database of field measurements associated with a small area (a bin or a segment) in the service area, where a radio fingerprint of the bin or segment is computed and indicates its radio channel conditions. In an example, the fingerprint includes the identity and strength (IS) of radio control channels from surrounding cells seen by a wireless receiver, and additional data such as round trip times (RTT) between the device and its serving cell. The construction of the database, known as "training," is performed before localization.

An embodiment method of calibration or training involves a first network element receiving a plurality of records from other (single to multiple) network elements to characterize an area of interest via direct measurement or a combination of direct and extrapolated measurements.

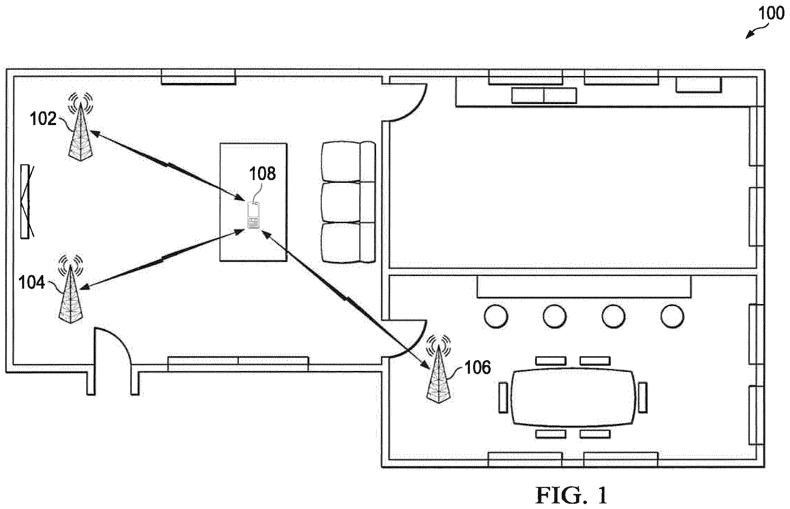

Figure 1 illustrates embodiment system 100 for training. System 100 includes user equipment 108 and base stations 102, 104, and 106. In Figure 1, user equipment 108 contains GPS receivers, and can transmit its measured IS, along with an estimated location, to processors within the network via the base stations 102, 104, 106. In this example, user equipment 108 may be a device in a test vehicle or a device carried by a walking test team that regularly reports the information (e.g., IS) the device is exposed to, along with a location fix. The test vehicle and/or test teams canvass the area of interest, including inside buildings, comprehensively. Alternatively, user equipment 108 is a member of a group of subscribers with phones containing GPS which may be participating in a training period. User equipment 108 runs an application, or is connected to appropriate additional devices, that collects and archives appropriate data, transmitting such data to the network at opportune (e.g., low-load) times to avoid placing extra signaling loads on the network at times of heavy commercial traffic. User equipment 108 will report a location if it has sufficient visibility to the GPS satellite constellation. If not, for example when user equipment 108 is deep indoors, it will report that it is unable to obtain an accurate location fix. In the latter case, in-building models within the area of interest will be used to process the IS associated with the inaccurate location fix and estimate the building or group of buildings containing UE 108. Thus, training data is collected from inside buildings as well as outdoors. The subscriber group or subscriber-carried method of collecting training data is less expensive, more feasible, and more comprehensive than data collection using drive test or walking teams. Finally, user equipment 108 may be any combination of devices carried by test vehicles or test teams and devices carried by commercial subscribers participating in the training process.

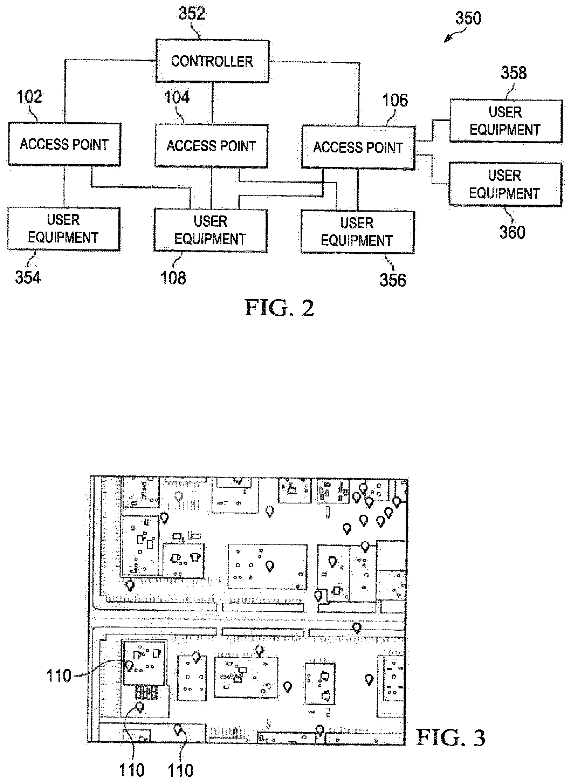

Figure 2 illustrates system 350, another system for training. Controller 352 is coupled to multiple access points, and collects data from them. Controller 352 receives information from access point 102, access point 104, and access point 106. The access points are coupled to, and collect data from, user equipments that are within range. Access point 102 receives information from user equipment 354 and user equipment 108. Also, access point 104 receives information from user equipment 108 and user equipment 356. Additionally, access point 106 receives information from user equipment 108, user equipment 356, user equipment 358, and user equipment 360. In Figure 2, user equipment 108, 356, 358, and 360 may be any combination of test vehicle, test team, or subscriber-carried devices that provide training data.

After training is complete, the network uses the IS reports provided by wireless devices for control purposes to localize the wireless devices. The reported IS may be mapped to the segments in the database with channel conditions that best align with the IS values. The accuracy of this process may be enhanced by the use of additional data, such as RTT. However, RTT alone is not sufficient to localize the wireless device, because delay only gives range but not bearing. Also, RTT is not part of routine device reporting, and is therefore not always available. Once determined, localizations can be employed to build up traffic densities. Figure 3 illustrates some wireless hotspots 110 in an area of a city.

Wireless device localization and traffic density estimation may be performed in a wireless network, such as a universal mobile telecommunications system (UMTS) network. For example, the UMTS network retrieves UMTS handset pilot information periodically via handset measurement reports (MR). MRs contain user equipments (UEs) active and monitored cell IDs, corresponding received signal code power (RSCP) and signal energy to interference (Ec/Io) measurements. Also, MRs contain a radio network controller (RNC) identification (ID), international mobile subscriber identity (IMSI), and time stamps associated with the UE. MRs are collected periodically or on demand via a network configurable parameter for all UEs in the region. Alternatively, another wireless network may be used, such as global system for mobile communications (GSM), general packet radio service (GPRS), code division multiple access (CDMA), long term evolution (LTE), evolution-data optimized (EV-DO), enhanced data rates for GSM evolution (EDGE), digital enhanced cordless telecommunications (DECT), digital advanced mobile phone service (AMPS), and integrated digital enhanced network (iDEN).

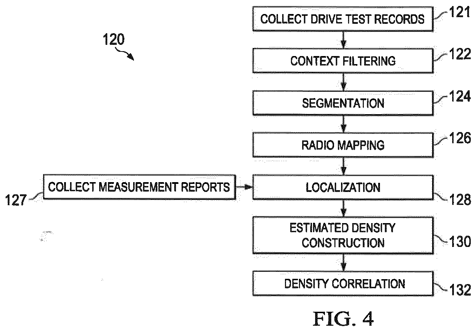

Figure 4 illustrates flowchart 120 depicting a method for localization and traffic density estimation. Initially, in step 121, the network collects drive test (DT) data. Drive test data may include the UE's identity (IMSI), the data and timestamp of the data records and active and monitored cell IDs, and the corresponding RSCP and Ec/Io measurements. Also, the latitude and longitude of the UE at the time of the data collection are recorded. Alternatively, such data may be collected by walk teams employing test devices or by a subset of subscribers with GPS-enabled phones that participate in the training process. The data collected in any method is referred to as "DT data" or "drive test data".

Next, in step 122, context filtering is performed on the drive test data. Context filtering determines which records in the drive test records are information rich. Records that provide more information than error are information rich. For example, a record which does not contain any RSPC measurements is not information rich. Also, a record which contains duplicate data may not be information rich. Records that are not information rich are discarded or ignored during context filtering, so the remaining records are all information rich.

Then, in step 124, segmentation is performed, and segments or bins are determined based on the drive test data. After segmentation, a radio map is developed in step 126, where fingerprints are developed corresponding to the segments. Steps 121 ("Collect Drive Test Records"), 122 ("Context Filtering"), 124 ("Segmentation"), and 126 ("Radio Mapping") are all performed during a training period.

Once a database is fully developed, and training is complete, in step 127, measurement reports (MR) are collected. Then, localization is performed in step 128 based on the measurement reports, the segments, and the radio map that have been developed. Next, an estimated density may be constructed in step 130. Finally, a density correlation between the estimated density and a true density may be prepared in step 132. The density correlation is performed during system development to indicate the accuracy of the estimated user density.

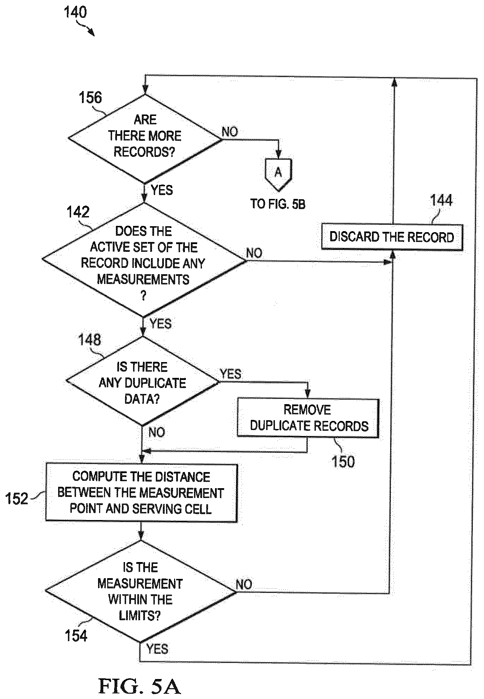

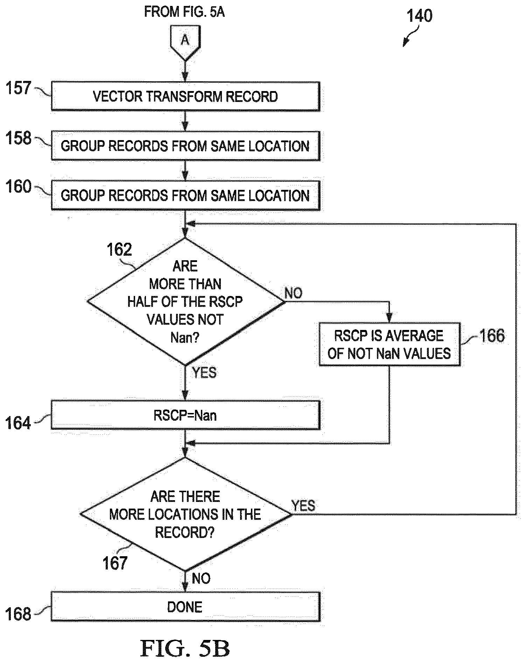

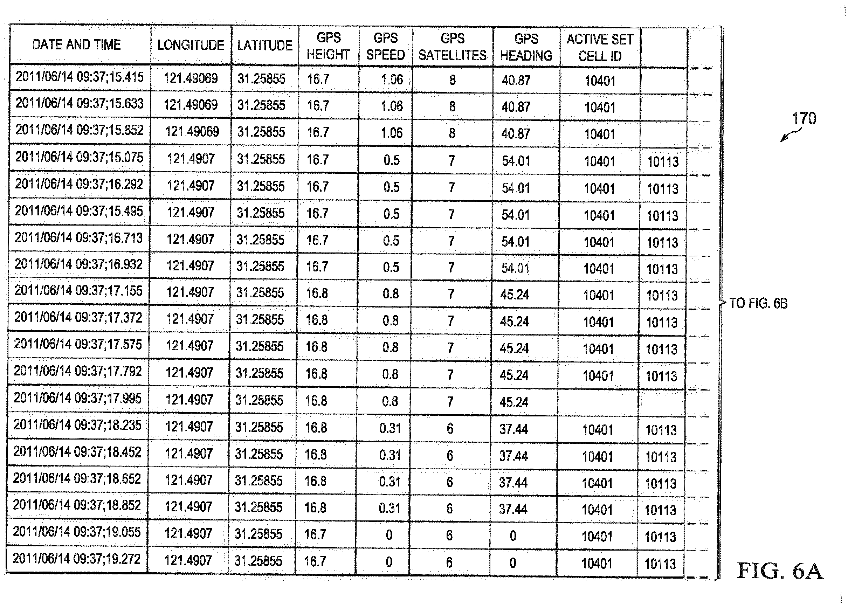

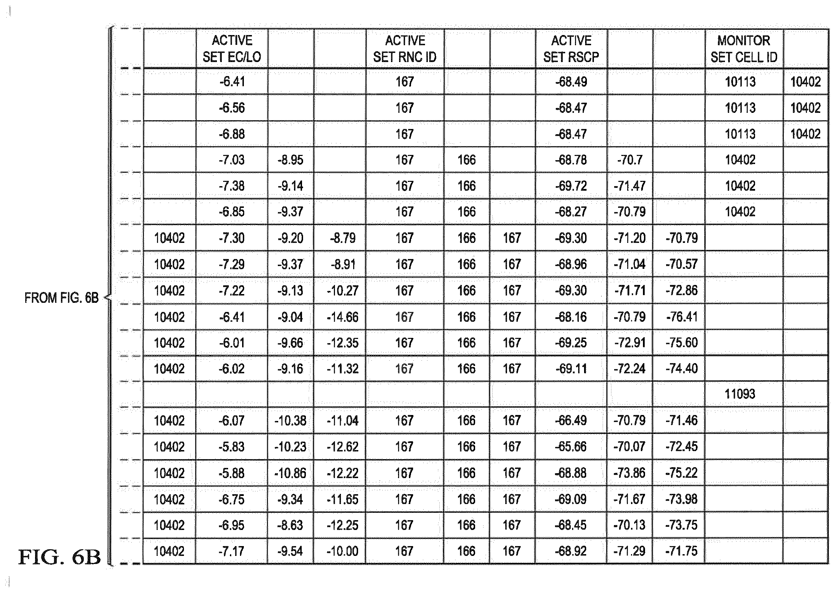

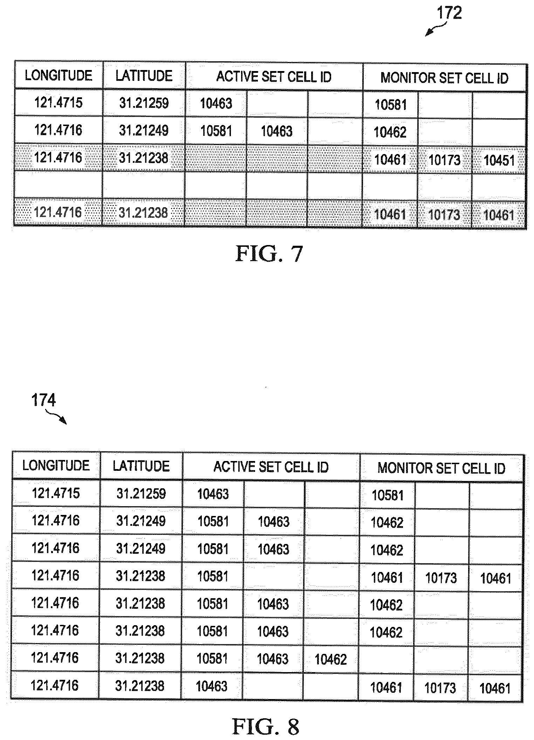

In context filtering, the integrity of the data set is checked, and outliers that may corrupt the radio map are removed. Data that would not be useful is discarded because it would contribute more error than information. Figures 5A-B illustrate flowchart 140 for a method of performing context filtering. Initially, drive test data may include a plurality of records, where each record contains a time stamp, an associated location, an IMSI, an RNC ID, active set cell IDs, monitored set cell IDs, RSCP, and Ec/Io information. Initially, in step 142, the network determines if the active set of the record includes any RSCP measurements. If the active set does not include any RSCP measurements, the record is discarded in step 144, and the network proceeds to step 156, where the network determines if there are more records. If there are more records, the system goes back to step 142, and if there are not any more records, the network goes to step 157. Figures 6A-B illustrate table 170 containing drive test data with active set pilots and monitor set pilots. Also, Figure 7 illustrates table 172 containing drive test data with active set cell IDs and monitor set cell ID. The partition of active set and monitor set is available in the DT data. This distinction is routinely made by the UE in cooperation with the network. If there are no RSCP measurements in the active set, the entire record is discarded, even if there is a reported measurement for the monitored set with cell IDs and corresponding RSCPs. However, if the active set of the record includes any active set measurements, the network proceeds to step 148, and determines if there is any duplicate data in the record. Figure 8 illustrates table 174, where duplicate cell IDs have been removed. If there is no duplicate data in the record, the network proceeds to step 152. However, if there is duplicate data in the data record, the duplicate data is removed in step 150. The record itself is not discarded, only data associated with the duplicate cell IDs and the corresponding RSCP measurements is discarded.

Then, the method proceeds to step 152. In step 152, the network computes the distance between the measurement point and the serving cell. Next, in step 154, the network determines if the measurement is within predetermined limits. Records are discarded based on the distance between the measurement report and the serving cell. The distance between the UE and the serving cell is calculated. Minimum and maximum distance criteria can be established and applied. For example, the minimum distance might be 1000 m and the maximum distance might be 50 m. The distance is compared to the minimum distance and the maximum distance. If the distance is less than the minimum distance or greater than the maximum distance, the record is discarded in step 144, and the network goes to step 156 to determine if there are more records. If the distance is between the minimum distance and the maximum distance, the network goes directly to step 156. Various considerations (topology, extent and nature of urban development, etc.) can impact values established for the minimum and maximum distance values.

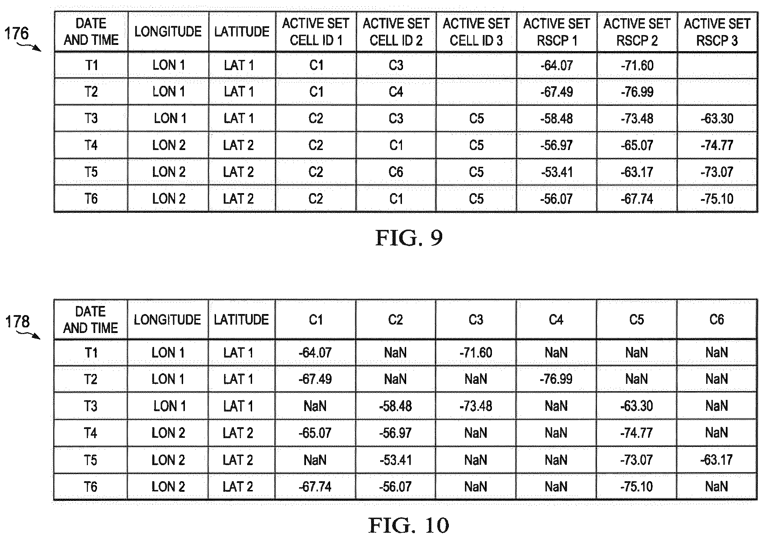

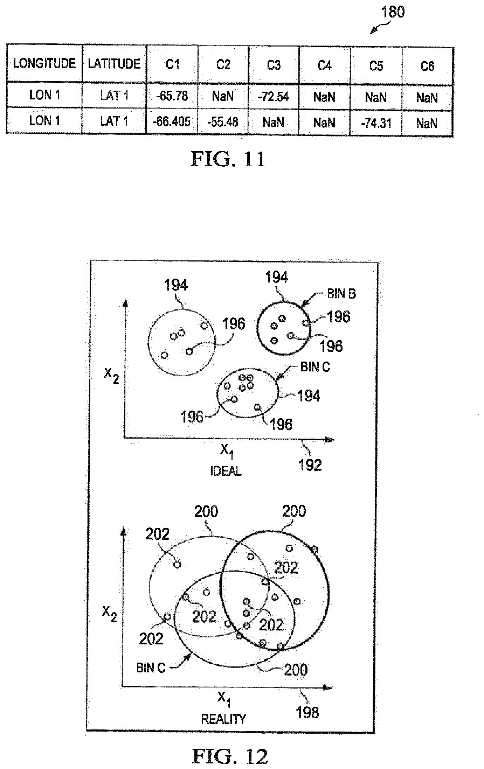

After the records have been determined or altered to be information rich, a vector transformation is performed on the records in step 157. Before the vector transformation, a record header includes the date-time, the longitude, the latitude, monitored set RSCPs, and active set RSCPs. After the vector transformation, the new record header includes the date-time, the longitude, the latitude, and all RSCPs. Figure 9 illustrates table 176 containing drive records before the vector transformation, and Figure 10 illustrates table 178 containing drive records after the vector transformation. The date-time, the longitude, and the latitude columns are copied into the same columns for the new format. For each record, the non-empty RSCP values are mapped to the corresponding columns, and all other cell IDs take a value of not a number (NaN). Each row of the new record may be referred to as a vector. Then, in step 160, the vectors for the same location are grouped together. In step 162, for each location, it is determined if more than half of the RSCP values for the grouped records are NaN. Then, in step 164, the RSCP values for that location is set to NaN. If more than half of the RSCP values for the location are not NaN values, the RSCP is set to the average of the not NaN values for that locations in step 166. Figure 11 illustrates table 180 containing drive test data that has been grouped together by location and averaged. Next, in step 167, it is determined if there are more locations of records. If there are more locations, the method goes to step 162 to analyze the next location. However, if there are not more locations, the network goes to step 168 with context filtering complete.

The processed drive test records are used to produce a radio map database containing maximally distinct RF characteristics or fingerprints for each defined position by region or segment. The uniqueness of fingerprints is relevant to localization. As an example, Figure 12 illustrates ideal configuration 192 and real configuration 198. The axes for both configurations illustrate received signal strengths from two cell sites as seen within distinct bins or distinct segments A, B, and C. In ideal configuration 192, received signals can be clearly grouped into bins. In this case, the bin fingerprints are unique and do not overlap. It is likely that an additional observation of two signal strengths x1 and x2 from a device within one of the three bins can be easily associated with a specific bin. However, in a more realistic configuration 198, received signals are scattered, and not clearly grouped; i.e., the bin fingerprints overlap. It is likely that an additional observation of two signal strengths x1 and x2 from a device within the three bins cannot be readily associated with a specific bin. The designation of segments and the processing of their corresponding fingerprints affect the uniqueness of the RF properties of the segments. For example, a different designation of the size and shape of bins in the reality chart of figure 12 could result in an arrangement where the bins show less overlap, and the fingerprints associated with bins are more unique.

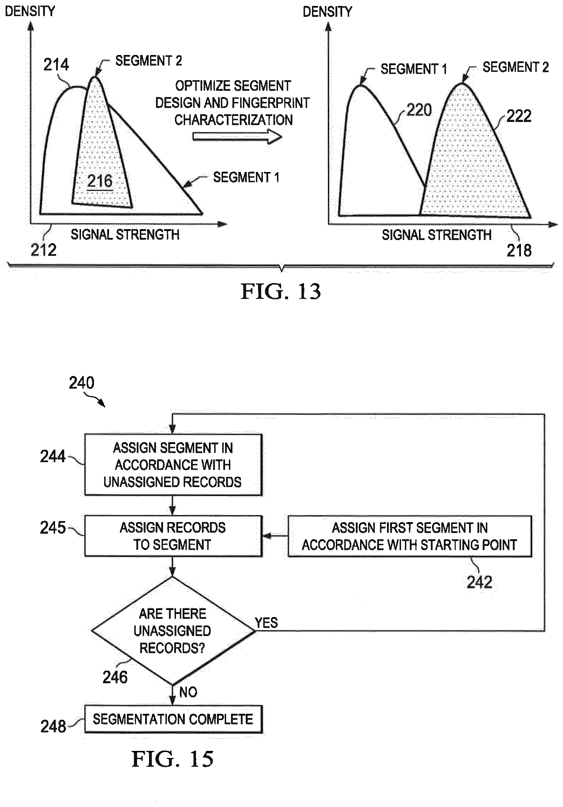

Figure 13 illustrates further perspective on this concept via plots 212 and 218. Suppose we are examining the received signal strength of a pilot from a single radio tower or node B within an area that we have divided into two bins. Each bin will show a distribution or fingerprint of the received signal strengths across its area. Plot 212 shows the collection of received signal strengths for bin 214 and bin 216, where the height of these distributions represents the frequency at which a given value of signal strength is observed. In plot 212, the division of the area into two bins is poor. The size, shape, and orientation of the bins are poor because the distribution of values in both bins overlaps. In fact, the values observed in bin 214 are also observed in bin 216. It would be very difficult to determine whether a signal strength value that fell within bin 216 was from bin 214 or bin 216. The size, shape, and orientation of bins can be chosen to eliminate such ambiguity, to ensure that the distributions or fingerprints are more distinct.

The result of a better division is shown in plot 218. Here, virtually any observed value of signal strength can be readily associated with either bin 220 or bin 222. The only ambiguity is in values observed in the middle small overlap of the two distributions. By properly designing segments and fingerprint characterization, the overlapping area can be reduced, and the probability of making a correct localization decision is improved. In one example, distinct segments are obtained by creating uniform segments where the area of interest is divided into equal square shaped grids. The uniform binning is independent of the location of the measurement data. In another example, the segments are determined based on the drive test data. Segments may vary in size and have irregular shapes. Segments may be formed based on statistical segmentation or spatial segmentation. In statistical segmentation, all measurement samples that have coherent statistical characteristics, such as mean, correlation, variance, and count, and that have a distance between the distinct originations of those samples do not exceed prescribed thresholds are grouped in the same segment. Additionally, a confidence level may be assigned to each segment based on the degree of coherence. In spatial segmentation, the measurement samples are grouped based on the maximum distance between their originations. The maximum distance may be chosen by a user. A confidence level may also be assigned to each segment based on the count and variance of the measurement points within each segment.

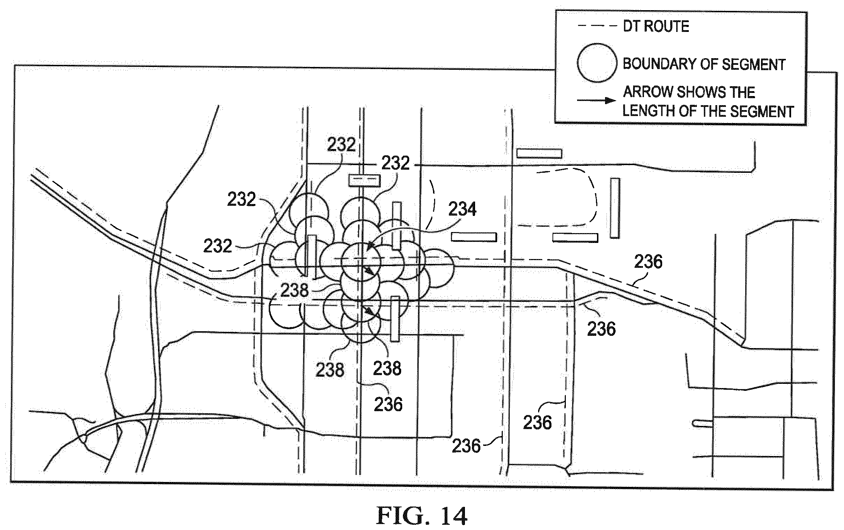

Figure 14 illustrates an example of spatial segmentation for an arbitrary drive test route, where the boundary of each segment is a function of the drive test data. Figure 14 includes drive test route 236, segment boundaries 232, segment lengths 238, and drive test start point 234. The segments are irregular in size and shape. Figure 15 illustrates flowchart 240 for defining segments based on drive test data. Initially, in step 242, the first segment is assigned a starting point. Also, a maximum segment length is selected. In an example, the starting point of the first segment is the starting point of the drive route, and the maximum segment length is determined by a user. The segments may all have the same segment length, or they may have different segment lengths. However, the maximum segment length is never exceeded. The first segment is a circle with a radius of the segment length and a center of the starting point.

Then, in step 245, drive test records are assigned to the first segment. The generalized distance measure or distance between the drive test records and the center of the first segment are calculated. Where the distance between the drive test record and the center of the segment is less than the segment length, the drive test record is assigned to that segment. Then, in step 246, it is determined if there are more unassigned drive test records. If there are no unassigned drive test records, segmentation is complete in step 248, if there are unassigned drive test records, the next segment is determined in step 244.

Next, the next segment is determined in step 244. The drive test record that is the closest unassigned drive test record is assigned the starting point of the next segment. The next segment is assigned a segment length. Unassigned drive test records that are within the segment length of the starting point of the segment are assigned to the segment. The unassigned drive test record that is the closest unassigned drive test record becomes the starting point. This procedure is repeated until all drive test records are assigned to a segment. The resulting segments have irregular sizes and shapes, as illustrated in Figure 14.

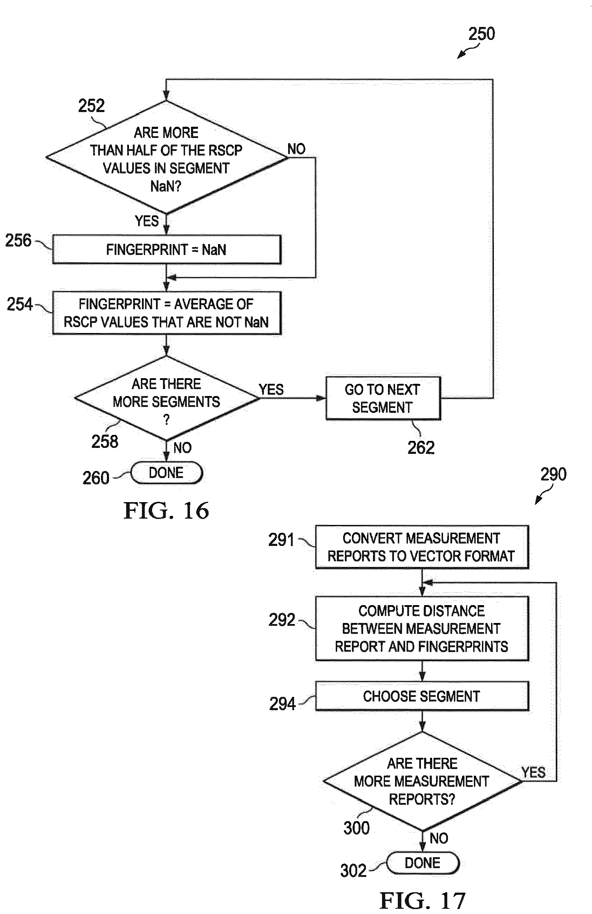

After the segments are defined, a radio map is constructed, and the segments are assigned a unique fingerprint. In an example, the fingerprints rely on the statistical average of the signal strength for each pilot over all measurements collected within the segment. In another example, each segment is associated with the most frequent pilots observed in the segment during the training data. Figure 16 illustrates flowchart 250 for a method of constructing a radio map. The database of the radio map is constructed by grouping and averaging the RSCP values of the drive test vectors in the segments. Initially, in step 252, it is determined if half or more of the RSCP values in the segment are NaN. If half or more of the RSCP values in the segment are NaN, the fingerprint for the segment is assigned to NaN in step 256. However, if more than half of the RSCP values in the segment are not NaN, the fingerprint for the segment is assigned to the average of the RSCP values in the segment that are not NaN in step 254. Next, in step 258, it is determined if there are more segments to assign a fingerprint. If there are no more segments, the radio map is complete in step 260. However, if there are more segments, the network goes to the next segment in step 262, and determines if more than half of the RSCP values are NaN for the next segment in step 252. After the radio map is complete, the training is finished.

When the training is complete, the network assigns measurement reports to segments based on fingerprints in the radio map's database. The segment containing the fingerprint that most closely matches the RSCP value of the measurement report is a segment that the measurement report is assigned to. Figure 17 illustrates flowchart 290 for the localization of measurement reports. Initially, in step 291, the measurement reports are converted to vector format. The time, longitude, latitude, RNC IDs, cell IDs, and RSCP values of the measurement reports are transformed into a vector format similar to the vector format of the drive test data. Then, in step 292, the distance between the measurement reports and the fingerprints is determined. Then, in step 294, the measurement report is assigned to the fingerprint that is the closest match of the measurement report. This closest match may be chosen from a subset of fingerprints that-based on offline modeling-fall within a predicted coverage area of the best serving cell or best server observed by the UE. Alternatively, the closest match may be chosen from all available fingerprints. The former approach is termed 'best server constraint' since the approach constrains the available choices for match to those fingerprints lying within the projected coverage area of the best serving cell. If there is a best server (BS) constraint, the comparison of measurement report is limited to segments having a matching best server to the measurement report. However, if there is no best server constraint, the measurement report may be assigned to any segment. The distance between the measurement report and the segments is computed. The distance is the minimum value of

$$\|R_\tau - \bar{S}_k\| = \sqrt{\sum_{m=1}^{N} (r_\tau^m - \bar{s}_k^m)^2}$$

where $R_\tau$ is the vectorized measurement report at an instance $\tau$, $\overline{S}_k$ is the segment, N is the number of elements in the vector $R_\tau$, $r\tau$ is the $\tau$th element of $R_\tau$, and $\overline{s}_k$ is fingerprint for $\overline{S}_k$. If neither the fingerprint nor the measurement report RSCP value is NaN, their difference is the difference between the RSCP value of the measurement report and the fingerprint of the segment. If both the measurement report and the fingerprint of the segment have a value of NaN, their difference is 0, and if one of the measurement report and the fingerprint of the segment is NaN and the other not NaN, the distance is set to infinity. If there is no best server that matches the optimized criteria, the output may be a predetermined value, such as -999. However, if there is no best server constraint, all segments are considered, and the segment whose fingerprint is the closest to the RSCP value of the measurement report is the segment the measurement report is assigned to. Then, in step 300, the network determines if there are more measurement reports to assign to segments. If there are more measurement reports, the network goes to step 292 to compute the distance between the next measurement report and the fingerprints of the segment. However, if there are no more measurement reports, the localization is complete in step 302.

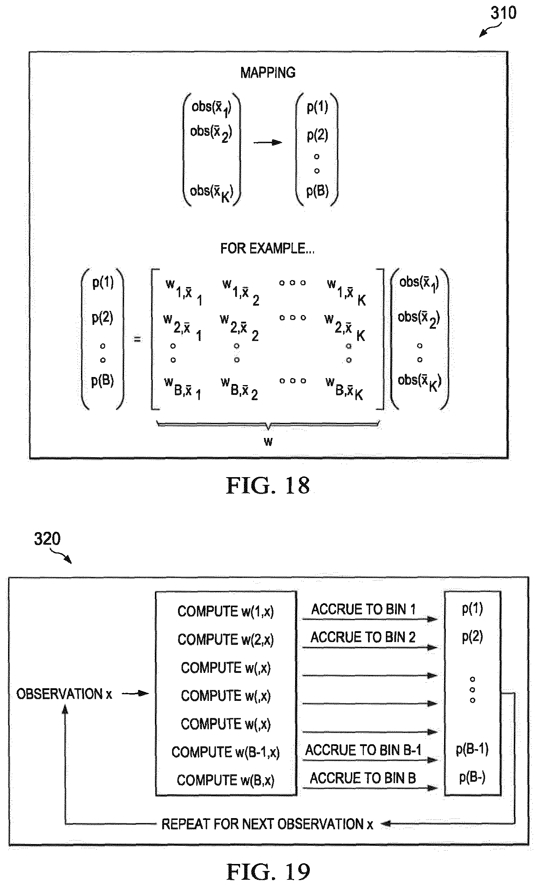

The traffic density may be constructed after the localization. In one example, high-resolution maps of traffic density are obtained by aggregating localization decisions. For example, all localizations established within a segment may be summed over a prescribed time based on a hard decision, where each localization ascribes a specific, single location to the UE. In another example, a soft decision approach is used, where the location of a particular UE is assigned to multiple segments. Instead of the entire measurement report being assigned to one segment, fractions of a single measurement report may be assigned to multiple segments. In an example, 100% of each measurement report is assigned. For example, ½ of the measurement report is assigned to a first segment, ¼ of the measurement report is assigned to a second segment, and ¼ of the measurement report is assigned to a third segment. Soft decision making may be viewed as a mapping between the set of observations and the collection of user fractions or traffic density p across segments, as illustrated by mapping 310 in Figure 18. In mapping 310, W is a matrix that transforms measurement reports into traffic densities. An embodiment of soft decision mapping that is implemented on an observation to observation basis is illustrated by mapping 320 in Figure 19. Densities may be estimated by aggregating the localization decisions into segments over time via a soft decision making process.

There are a variety of approaches that may be used in performing soft decision making. Assuming a limited number of N decisions are appropriate per measurement report, N distinct segments are observed for each measurement report. A fraction of the N decisions may be associated with a given segment based on the accuracy and confidence levels of the match of the measurement report and the segment. The decisions may be weighted. In one example, a minimum distance inverse is used. The inverse of signal distances, the distances between the MRs and fingerprints in a higher dimension space with dimensionality determined by the number of entries in the fingerprints between the measurement report and the fingerprint of the segment are used. All N inversed decisions are normalized, and fractional weights are associated with each decision. Thus, the probability that a given observations falls within b(i) is:

$$p(b_i) = \frac{\dfrac{1}{R_i}}{\displaystyle\sum_{i=1}^{N} \dfrac{1}{R_i}},$$

where $b_i$ is the ith bin or segment and $R_i$ is the distance between the measurement report value and the fingerprint associated with the ith bin. Another approach is the minimum distance inverse squared computed in the signal space, where the inverse of the square of the signal distance is used for weighting decisions. Hence, the probability that an observation falls within the ith bin is:

$$p(b_i) = \frac{\dfrac{1}{R_i^2}}{\displaystyle\sum_{i=1}^{N} \dfrac{1}{R_i^2}}.$$

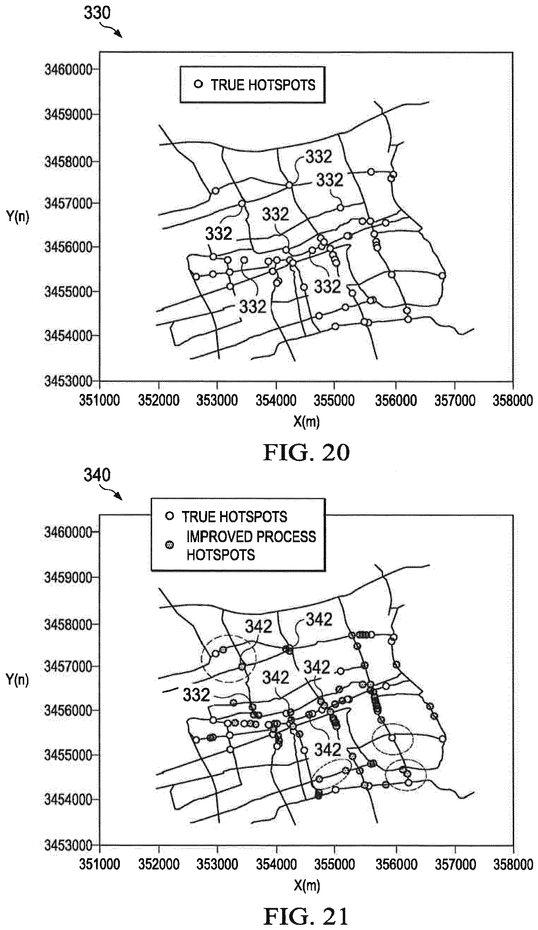

In another example, equal weights are used for every decision. All N decisions are given equal chances due to similar characteristics of neighboring segments. Alternatively, biased weights of the decisions are used. For example, if the distance between the measurement report and the fingerprint of the segment is zero for an exact match, this decision will have a weight of 1, and the rest of the decisions will be weighted at 0. However, if none of the fingerprints of the segments exactly match the values of the measurement report the first few decisions are given higher weights and later decisions are given lower weights. Hence, the decision weights are biased based on the likelihood that the measurement report is associated with the segment. Finally, a density correlation may be performed. A density correlation is performed during network development (or optimization following development) to identify how accurate an estimated density map is by comparing the estimated density map to a true density map. After measurement report localization, the measurement report origination density or user location densities may be calculated. In an example, the true user density is known. Figure 20 illustrates map 330 depicting some of the key features of true user density. In this case of local density concentrations or user concentrations are called hotspots 332. The true user density (TUD) is the actual number of originations per square unit area. In an example, the true user density is given by the fraction of the number of true user originations in a segment divided by the segment size. With traffic density estimated, estimated hotspots may be compared to true hotspots. Figure 21 illustrates map 340 which shows true user density hotspots 332 and estimated user density hotspots 342. The estimated user density (EUD) is the estimated number of users per square unit area. The estimated user density is given by the fraction of the number of estimated users in a segment divided by the area of the segment. The normalized user density is given by:

$$\frac{n_i}{b_i \sum n_j},$$

where $n_i$ is the number of originations in the ith segment, $b_i$ is the size of the ith segment, and $\sum n_j$ is the total number of originations. The normalized user density enables the comparison of two distributions where the total number of measurement reports is not the same for true users and estimated users, but they are drawn from the same underlying distribution. The normalized true user density and normalized estimated user density are both calculated. A full comparison of user densities examines not only the hotspots but compares the overall shape of estimated density to true density. A metric may compare the normalized true user density and the normalized estimated user density to indicate how accurately the estimated user density tracks the actual user density. For example, Pearson's correlation of coefficient test may be used where the coefficient of correlation is:

$$\rho(X, \hat{X}) = \frac{cov(X, \widehat{X})}{std(X) std(\widehat{X})} = \frac{\sum X \hat{X} - \frac{\sum X \sum \bar{X}}{N}}{\sqrt{\left(\sum X^2 - \frac{\sum X^2}{N}\right)} \sqrt{\left(\sum \hat{X}^2 - \frac{\sum X^2}{N}\right)}},$$

where $X$ is the normalized true user density, $\hat{X}$ is the normalized estimated user density, and $N$ is the number of segments. The segment size affects the correlation coefficient. For example, because the sum of all probability distributions is one, if the segment size is large enough, one segment will cover the entire test area, which would give a falsely high estimate of the correlation coefficient. Conversely, a small segment size may yield a falsely low estimate of the correlation coefficient.

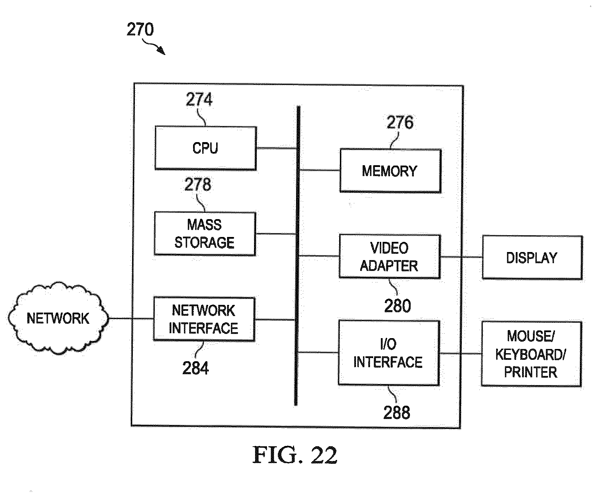

Figure 22 illustrates a block diagram of processing system 270 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system may comprise a processing unit equipped with one or more input devices, such as a microphone, mouse, touchscreen, keypad, keyboard, and the like. Also, processing system 270 may be equipped with one or more output devices, such as a speaker, a printer, a display, and the like. The processing unit may include central processing unit (CPU) 274, memory 276, mass storage device 278, video adapter 280, and I/O interface 288 connected to a bus.

The bus may be one or more of any type of several bus architectures including a memory bus or memory controller, a peripheral bus, video bus, or the like. CPU 274 may comprise any type of electronic data processor. Memory 276 may comprise any type of system memory such as static random access memory (SRAM), dynamic random access memory (DRAM), synchronous DRAM (SDRAM), read-only memory (ROM), a combination thereof, or the like. In an embodiment, the memory may include ROM for use at boot-up, and DRAM for program and data storage for use while executing programs.

Mass storage device 278 may comprise any type of storage device configured to store data, programs, and other information and to make the data, programs, and other information accessible via the bus. Mass storage device 278 may comprise, for example, one or more of a solid state drive, hard disk drive, a magnetic disk drive, an optical disk drive, or the like.

Video adaptor 280 and I/O interface 288 provide interfaces to couple external input and output devices to the processing unit. As illustrated, examples of input and output devices include the display coupled to the video adapter and the mouse/keyboard/printer coupled to the I/O interface. Other devices may be coupled to the processing unit, and additional or fewer interface cards may be utilized. For example, a serial interface card (not pictured) may be used to provide a serial interface for a printer.

The processing unit also includes one or more network interface 284, which may comprise wired links, such as an Ethernet cable or the like, and/or wireless links to access nodes or different networks. Network interface 284 allows the processing unit to communicate with remote units via the networks. For example, the network interface may provide wireless communication via one or more transmitters/transmit antennas and one or more receivers/receive antennas. In an embodiment, the processing unit is coupled to a local-area network or a wide-area network for data processing and communications with remote devices, such as other processing units, the Internet, remote storage facilities, or the like.

Advantages of an embodiment include the production of a database that maximizes the uniqueness of fingerprints between segments, enhancing the accuracy of segment localization. In an embodiment, the estimated traffic density is accurately derived using a soft decision making process. In an example, a 30% improvement over existing networks is present. In an embodiment, the accuracy of the traffic density estimation is evaluated.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

**Claims**

1. A method of constructing a database for localizing wireless devices, the method comprising:

   receiving, by a first network element, a plurality of records from a second network element;
   determining (242) a first segment;
   assigning (245) a first drive test record of the plurality of records to the first segment;
   determining (244) a second segment, wherein a first area of the first segment is not equal to a second area of the second segment; and
   assigning (245) a second drive test record of the plurality of records to the second segment,
   wherein each drive test record includes at least a location of a measurement point and a cell identification, ID, of a serving cell,

   **characterized in that**
   before the steps of assigning the method further comprises, for each drive test record:

   computing (152) a distance between said location and the serving cell;
   determining (154) whether the distance is between a pre-set minimum distance and a pre-set maximum distance; and
   if the distance is less than the minimum distance or greater than the maximum distance, discarding (144) the drive test record.

2. The method of claim 1, wherein the first segment has a first starting point and a first length (238), wherein the second segment has a second starting point and a second length (238), wherein assigning (245) the first drive test record to the first segment comprises determining that the first drive test record is in the first segment when a first distance between the first starting point of the first segment and the first drive test record is less than the first length of the first segment, and wherein assigning (245) the second drive test record to the second segment comprises determining that a second distance between the second starting point of the second segment and the second drive test record is less than the second length.

3. The method of claim 2, further comprising assigning (245) a first plurality of drive test records to the second segment.

4. The method of claim 3, further comprising:

determining a count of the first plurality of drive test records;
determining a variance of the first plurality of drive test records; and
assigning a confidence level to the second segment in accordance with the count of the first plurality of drive test records and the variance of the first plurality of drive test records.

5. The method of claim 2, wherein the first length (238) of the first segment is equal to the second length (238) of the second segment.

6. The method of claim 2, wherein a first plurality of drive test records comprises a second plurality of drive test records and a third plurality of drive test records, the method further comprising:

calculating a first plurality of distances between the second plurality of drive test records and the first starting point of the first segment;
assigning the second plurality of drive test records to the first segment when the first plurality of distances are less than the first length (238) of the first segment;
calculating a second plurality of distances between the third plurality of drive test records and the first starting point of the first segment; and
determining that the third plurality of drive test records is not in the first segment when the second plurality of distances are greater than the first length (238) of the first segment.

7. The method of claim 6, further comprising:

calculating a third plurality of distances between the third plurality of drive test records and the second starting point of the second segment; and
determining that the third plurality of drive test records is in the second segment when the third plurality of distances are less than the second length (238) of the second segment.

8. The method of claim 1, further comprising determining the second segment in accordance with coherent statistical characteristics of the plurality of records.

9. The method of claim 8, wherein the coherent statistical characteristics comprise a mean, a correlation, a variance, and a count.

10. The method of claim 1, further comprising constructing (250) a radio map in accordance with the first segment, the second segment, and the plurality of records.

11. A method for constructing a density map of wireless device density, the method comprising:

receiving, by a network element, a plurality of measurement reports;
obtaining drive test records assigned to segments from a database constructed according to the method of any one of claims 1 to 10;
obtaining (250) a plurality of fingerprints from said drive test records;

**characterized in that** the method further comprises:

calculating (292) a plurality of distances between a first measurement report of the plurality of measurement reports and the plurality of fingerprints, wherein a minimum distance of the plurality of distances is a first distance between the first measurement report and a first fingerprint of the plurality of fingerprints, and wherein a second smallest distance of the plurality of distances is a second distance between the first measurement report and a second fingerprint of the plurality of fingerprints;
allocating (294, 310, 320) a first fraction of the first measurement report to a first segment corresponding to the first fingerprint; and
allocating (294, 310, 320) a second fraction of the first measurement report to a second segment corresponding to the second fingerprint.

**12.** The method of claim 11, wherein a third smallest distance of the plurality of distances is a third distance between the first measurement report and a third fingerprint of the plurality of fingerprints, the method further comprising allocating a third fraction of the first measurement report to a third segment corresponding to the a third fingerprint.

**13.** The method of claim 11, further comprising allocating (294, 310, 320) a third fraction of a second measurement report of the plurality of measurement reports to the first segment wherein the first measurement report and the second measurement report have a same best server.

**14.** The method of claim 1, further comprising:

determining (148) if the first drive test record comprises a duplicate cell ID, and if a duplicate cell ID is found, removing (150) the duplicate cell ID, and/or
determining (142) if the first drive test record comprises any received signal code power, RSCP, measurements for the serving cell, and if there first drive test record does not include any RSCP measurements for the serving cell, discarding (144) the first drive test record.

**Patentansprüche**

**1.** Verfahren zum Bilden einer Datenbank zum Orten von drahtlosen Vorrichtungen, wobei das Verfahren umfasst:

Empfangen, durch ein erstes Netzwerkelement, einer Vielzahl von Aufzeichnungen von einem zweiten Netzwerkelement,
Bestimmen (242) eines ersten Segments,
Zuordnen (245) einer ersten Fahrtestaufzeichnung der Vielzahl von Aufzeichnungen zu dem ersten Segment,
Bestimmen (244) eines zweiten Segments, wobei ein erster Bereich des ersten Segments nicht einem zweiten Bereich des zweiten Segments gleicht, und
Zuordnen (245) einer zweiten Fahrtestaufzeichnung der Vielzahl von Aufzeichnungen zu dem zweiten Segment, wobei jede Fahrtestaufzeichnung mindestens eine Position eines Messpunkts und eine Zellenidentifikation, Zellen-ID, einer bedienenden Zelle umfasst,
**dadurch gekennzeichnet, dass**
vor den Schritten des Zuordnens das Verfahren ferner für jede Fahrtestaufzeichnung Folgendes umfasst:

Berechnen (152) einer Entfernung zwischen der Position und der bedienenden Zelle, Bestimmen (154), ob die Entfernung zwischen einer voreingestellten minimalen Entfernung und einer voreingestellten maximalen Entfernung liegt, und
wenn die die Entfernung kleiner als die minimale Entfernung oder größer als die maximale Entfernung ist, Verwerfen (144) der Fahrtestaufzeichnung.

**2.** Verfahren nach Anspruch 1, wobei das erste Segment einen ersten Startpunkt und eine erste Länge (238) aufweist, wobei das zweite Segment einen zweiten Startpunkt und eine zweite Länge (238) aufweist, wobei das Zuordnen (245) der ersten Fahrtestaufzeichnung zu dem ersten Segment ein Bestimmen umfasst, dass sich die erste Fahrtestaufzeichnung in dem ersten Segment befindet, wenn eine erste Entfernung zwischen dem ersten Startpunkt des ersten Segments und der ersten Fahrtestaufzeichnung kleiner ist als die erste Länge des ersten Segments, und wobei das Zuordnen (245) der zweiten Fahrtestaufzeichnung zu dem zweiten Segment ein Bestimmen umfasst, dass eine zweite Entfernung zwischen dem zweiten Startpunkt des zweiten Segments und der zweiten Fahrtestaufzeichnung kleiner ist als die zweite Länge.

**3.** Verfahren nach Anspruch 2, das ferner ein Zuordnen (245) einer ersten Vielzahl von Fahrtestaufzeichnungen zu dem zweiten Segment umfasst.

**4.** Verfahren nach Anspruch 3, ferner umfassend:

Bestimmen einer Anzahl der ersten Vielzahl von Fahrtestaufzeichnungen,
Bestimmen einer Varianz der ersten Vielzahl von Fahrtestaufzeichnungen, und
Zuordnen einer Vertrauensstufe zu dem zweiten Segment gemäß der Anzahl der ersten Vielzahl von Fahrtestaufzeichnungen und der Varianz der ersten Vielzahl von Fahrtestaufzeichnungen.

5. Verfahren nach Anspruch 2, wobei die erste Länge (238) des ersten Segments der zweiten Länge (238) des zweiten Segments gleicht.

6. Verfahren nach Anspruch 2, wobei eine erste Vielzahl von Fahrtestaufzeichnungen eine zweite Vielzahl von Fahrtestaufzeichnungen und eine dritte Vielzahl von Fahrtestaufzeichnungen umfasst, wobei das Verfahren ferner umfasst:

Berechnen einer ersten Vielzahl von Entfernungen zwischen der zweiten Vielzahl von Fahrtestaufzeichnungen und dem ersten Startpunkt des ersten Segments,

Zuordnen der zweiten Vielzahl von Fahrtestaufzeichnungen zu dem ersten Segment, wenn die erste Vielzahl von Entfernungen kleiner ist als die erste Länge (238) des ersten Segments,

Berechnen einer zweiten Vielzahl von Entfernungen zwischen der dritten Vielzahl von Fahrtestaufzeichnungen und dem ersten Startpunkt des ersten Segments, und

Bestimmen, dass sich die dritte Vielzahl von Fahrtestaufzeichnungen nicht in dem ersten Segment befindet, wenn die zweite Vielzahl von Entfernungen größer ist als die erste Länge (238) des ersten Segments.

7. Verfahren nach Anspruch 6, ferner umfassend:

Berechnen einer dritten Vielzahl von Entfernungen zwischen der dritten Vielzahl von Fahrtestaufzeichnungen und dem zweiten Startpunkt des zweiten Segments, und

Bestimmen, dass sich die dritte Vielzahl von Fahrtestaufzeichnungen in dem zweiten Segment befindet, wenn die dritte Vielzahl von Entfernungen kleiner ist als die zweite Länge (238) des zweiten Segments.

8. Verfahren nach Anspruch 1, das ferner ein Bestimmen des zweiten Segments gemäß einer kohärenten statistischen Charakteristik der Vielzahl von Aufzeichnungen umfasst.

9. Verfahren nach Anspruch 8, wobei die kohärente statistische Charakteristik einen Mittelwert, eine Korrelation, eine Varianz und eine Anzahl umfasst.

10. Verfahren nach Anspruch 1, das ferner ein Bilden (250) einer Funkkarte gemäß dem ersten Segment, dem zweiten Segment und der Vielzahl von Aufzeichnungen umfasst.

11. Verfahren zum Bilden einer Dichtekarte einer Dichte drahtloser Vorrichtungen, wobei das Verfahren umfasst:

Empfangen, durch ein Netzwerkelement, einer Vielzahl von Messberichten,

Erlangen von Fahrtestaufzeichnungen, die Segmenten zugeordnet sind, von einer Datenbank, die gemäß dem Verfahren nach einem der Ansprüche 1 bis 10 gebildet wird,

Erlangen (250) einer Vielzahl von Fingerabdrücken von den Fahrtestaufzeichnungen,

**dadurch gekennzeichnet, dass** das Verfahren ferner umfasst:

Berechnen (292) einer Vielzahl von Entfernungen zwischen einem ersten Messbericht der Vielzahl von Messberichten und der Vielzahl von Fingerabdrücken, wobei eine minimale Entfernung der Vielzahl von Entfernungen eine erste Entfernung zwischen dem ersten Messbericht und einem ersten Fingerabdruck der Vielzahl von Fingerabdrücken ist, und wobei eine zweitkleinste Entfernung der Vielzahl von Entfernungen eine zweite Entfernung zwischen dem ersten Messbericht und einem zweiten Fingerabdruck der Vielzahl von Fingerabdrücken ist,

Zuweisen (294, 310, 320) eines ersten Teils des ersten Messberichts zu einem ersten Segment, das dem ersten Fingerabdruck entspricht, und

Zuweisen (294, 310, 320) eines zweiten Teils des ersten Messberichts zu einem zweiten Segment, das dem zweiten Fingerabdruck entspricht.

12. Verfahren nach Anspruch 11, wobei eine drittkleinste Entfernung der Vielzahl von Entfernungen eine dritte Entfernung zwischen dem ersten Messbericht und einem dritten Fingerabdruck der Vielzahl von Fingerabdrücken ist, wobei das Verfahren ferner ein Zuweisen eines dritten Teils des ersten Messberichts zu einem dritten Segment, das dem dritten Fingerabdruck entspricht, umfasst.

13. Verfahren nach Anspruch 11, das ferner ein Zuweisen (294, 310, 320) eines dritten Teils eines zweiten Messberichts der Vielzahl von Messberichten zu dem ersten Segment umfasst, wobei der erste Messbericht und der zweite Messbericht einen gleichen besten Server aufweisen.

14. Verfahren nach Anspruch 1, ferner umfassend:

Bestimmen (148), ob die erste Fahrtestaufzeichnung eine doppelte Zellen-ID umfasst, und falls eine doppelte Zellen-ID gefunden wird, Entfernen (150) der doppelten Zellen-ID, und/oder

Bestimmen (142), ob die erste Fahrtestaufzeichnung irgendwelche Empfangssignalcodeleistungs(Received Signal Code Power, RSCP)-Messungen für die bedienende Zelle umfasst, und wenn die erste Fahrtestaufzeichnung keine RSCP-Messungen für die bedienende Zelle umfasst, Verwerfen (144) der ersten Fahrtestaufzeichnung.

**Revendications**

1. Procédé de construction d'une base de données pour localiser des dispositifs sans fil, le procédé comprenant de :

recevoir, par un premier élément de réseau, une pluralité d'enregistrements à partir d'un second élément de réseau ;

déterminer (242) un premier segment ;

affecter (245) un premier enregistrement de test de qualité de service de la pluralité d'enregistrements au premier segment ;

déterminer (244) un second segment, dans lequel une première zone du premier segment n'est pas égale à une seconde zone du second segment ; et

affecter (245) un second enregistrement de test de qualité de service de la pluralité d'enregistrements au second segment,

dans lequel chaque enregistrement de test de qualité de service comprend au moins une position d'un point de mesure et une identification de cellule, ID, d'une cellule de desserte,

**caractérisé en ce que**

avant les étapes d'affectation, le procédé comprend en outre, pour chaque enregistrement de test de qualité de service de :

calculer (152) une distance entre ladite position et la cellule de desserte ;

déterminer (154) si la distance se situe entre une distance minimale prédéfinie et une distance maximale prédéfinie ; et

si la distance est inférieure à la distance minimale ou supérieure à la distance maximale, rejeter (144) l'enregistrement de test de qualité de service.

2. Procédé selon la revendication 1, dans lequel le premier segment a un premier point de départ et une première longueur (238), dans lequel le second segment a un second point de départ et une seconde longueur (238), dans lequel l'affectation (245) du premier enregistrement de test de qualité de service au premier segment comprend de déterminer que le premier enregistrement de test de qualité de service est dans le premier segment lorsqu'une première distance entre le premier point de départ du premier segment et le premier enregistrement de test de qualité de service est inférieure à la première longueur du premier segment, et dans lequel l'affectation (245) du second enregistrement de test de qualité de service au second segment comprend de déterminer qu'une seconde distance entre le second point de départ du second segment et le second enregistrement de test de qualité de service est inférieure à la seconde longueur.

3. Procédé selon la revendication 2, comprenant en outre d'affecter (245) une première pluralité d'enregistrements de test de qualité de service au second segment.

4. Procédé selon la revendication 3, comprenant en outre de :

déterminer un nombre de la première pluralité d'enregistrements de test de qualité de service ;

déterminer une variance de la première pluralité d'enregistrements de test de qualité de service ; et

affecter un niveau de confiance au second segment en fonction du nombre de la première pluralité d'enregistrements de test de qualité de service et de la variance de la première pluralité d'enregistrements de test de qualité de service.

**5.** Procédé selon la revendication 2, dans lequel la première longueur (238) du premier segment est égale à la seconde longueur (238) du second segment.

**6.** Procédé selon la revendication 2, dans lequel une première pluralité d'enregistrements de test de qualité de service comprend une seconde pluralité d'enregistrements de test de qualité de service et une troisième pluralité d'enregistrements de test de qualité de service, le procédé comprenant en outre de :

calculer une première pluralité de distances entre la seconde pluralité d'enregistrements de test de qualité de service et le premier point de départ du premier segment ;
affecter la seconde pluralité d'enregistrements de test de qualité de service au premier segment lorsque la première pluralité de distances sont inférieures à la première longueur (238) du premier segment ;
calculer une seconde pluralité de distances entre la troisième pluralité d'enregistrements de test de qualité de service et le premier point de départ du premier segment ; et
déterminer que la troisième pluralité d'enregistrements de test de qualité de service ne sont pas dans le premier segment lorsque la seconde pluralité de distances sont supérieures à la première longueur (238) du premier segment.

**7.** Procédé selon la revendication 6, comprenant en outre de :

calculer une troisième pluralité de distances entre la troisième pluralité d'enregistrements de test de qualité de service et le second point de départ du second segment ; et
déterminer que la troisième pluralité d'enregistrements de test de qualité de service est dans le second segment lorsque la troisième pluralité de distances sont inférieures à la seconde longueur (238) du second segment.

**8.** Procédé selon la revendication 1, comprenant en outre de déterminer le second segment en fonction de caractéristiques statistiques cohérentes de la pluralité d'enregistrements.

**9.** Procédé selon la revendication 8, dans lequel les caractéristiques statistiques cohérentes comprennent une moyenne, une corrélation, une variance et un nombre.

**10.** Procédé selon la revendication 1, comprenant en outre de construire (250) une carte radio en fonction du premier segment, du second segment et de la pluralité d'enregistrements.

**11.** Procédé pour construire une carte de densité de densité de dispositifs sans fil, le procédé comprenant de :

recevoir, par un élément de réseau, une pluralité de rapports de mesure ;
obtenir des enregistrements de test de qualité de service affectés à des segments à partir d'une base de données construite selon le procédé selon l'une quelconque des revendications 1 à 10 ;
obtenir (250) une pluralité d'empreintes digitales à partir desdits enregistrements de test de qualité de service ;
**caractérisé en ce que** le procédé comprend en outre de :

calculer (292) une pluralité de distances entre un premier rapport de mesure de la pluralité de rapports de mesure et la pluralité d'empreintes digitales, dans lequel une distance minimale de la pluralité de distances est une première distance entre le premier rapport de mesure et une première empreinte digitale de la pluralité d'empreintes digitales, et dans lequel une seconde distance la plus petite de la pluralité de distances est une seconde distance entre le premier rapport de mesure et une seconde empreinte digitale de la pluralité d'empreintes digitales ;
affecter (294, 310, 320) une première fraction du premier rapport de mesure à un premier segment correspondant à la première empreinte digitale ; et
affecter (294, 310, 320) une seconde fraction du premier rapport de mesure à un second segment correspondant à la seconde empreinte digitale.

**12.** Procédé selon la revendication 11, dans lequel une troisième distance la plus petite de la pluralité de distances est une troisième distance entre le premier rapport de mesure et une troisième empreinte digitale de la pluralité d'empreintes digitales, le procédé comprenant en outre d'affecter une troisième fraction du premier rapport de mesure à un troisième segment correspondant à la troisième empreinte digitale.

**13.** Procédé selon la revendication 11, comprenant en outre d'affecter (294, 310, 320) une troisième fraction d'un second rapport de mesure de la pluralité de rapports de mesure au premier segment, dans lequel le premier rapport de mesure et le second rapport de mesure ont un même meilleur serveur.

14. Procédé selon la revendication 1, comprenant en outre de :

déterminer (148) si le premier enregistrement de test de qualité de service comprend une ID de cellule en double, et si une ID de cellule en double est détectée, supprimer (150) l'ID de cellule en double et/ou
déterminer (142) si le premier enregistrement de test de qualité de service comprend des mesures de puissance de code de signal reçu, RSCP, pour la cellule de desserte,
et si le premier enregistrement de test de qualité de service n'inclut pas de mesures RSCP pour la cellule de desserte, rejeter (144) le premier enregistrement de test de qualité de service.

FIG. 1

FIG. 2

FIG. 3

120

COLLECT DRIVE TEST RECORDS —121

↓

CONTEXT FILTERING —122

↓

SEGMENTATION —124

↓

RADIO MAPPING —126

↓

COLLECT MEASUREMENT REPORTS → LOCALIZATION —128

127

↓

ESTIMATED DENSITY CONSTRUCTION —130

↓

DENSITY CORRELATION —132

**FIG. 4**

140

156 — ARE THERE MORE RECORDS?

NO → (A) TO FIG. 5B

YES

142 — DOES THE ACTIVE SET OF THE RECORD INCLUDE ANY MEASUREMENTS ?

NO → DISCARD THE RECORD — 144

YES

148 — IS THERE ANY DUPLICATE DATA?

YES → REMOVE DUPLICATE RECORDS — 150

NO

152 — COMPUTE THE DISTANCE BETWEEN THE MEASUREMENT POINT AND SERVING CELL

IS THE MEASUREMENT WITHIN THE LIMITS?

154

NO

YES

FIG. 5A

FROM FIG. 5A

140

A

157 — VECTOR TRANSFORM RECORD

158 — GROUP RECORDS FROM SAME LOCATION

160 — GROUP RECORDS FROM SAME LOCATION

162
ARE
MORE THAN
HALF OF THE RSCP
VALUES NOT
Nan?

NO

RSCP IS AVERAGE
OF NOT NaN VALUES — 166

YES

164 — RSCP=Nan

ARE THERE
MORE LOCATIONS IN THE
RECORD?

YES

167

NO

168 — DONE

FIG. 5B

| DATE AND TIME | LONGITUDE | LATITUDE | GPS HEIGHT | GPS SPEED | GPS SATELLITES | GPS HEADING | ACTIVE SET CELL ID | |
|---|---|---|---|---|---|---|---|---|
| 2011/06/14 09:37;15.415 | 121.49069 | 31.25855 | 16.7 | 1.06 | 8 | 40.87 | 10401 | |
| 2011/06/14 09:37;15.633 | 121.49069 | 31.25855 | 16.7 | 1.06 | 8 | 40.87 | 10401 | |
| 2011/06/14 09:37;15.852 | 121.49069 | 31.25855 | 16.7 | 1.06 | 8 | 40.87 | 10401 | |
| 2011/06/14 09:37;15.075 | 121.4907 | 31.25855 | 16.7 | 0.5 | 7 | 54.01 | 10401 | 10113 |
| 2011/06/14 09:37;16.292 | 121.4907 | 31.25855 | 16.7 | 0.5 | 7 | 54.01 | 10401 | 10113 |
| 2011/06/14 09:37;15.495 | 121.4907 | 31.25855 | 16.7 | 0.5 | 7 | 54.01 | 10401 | 10113 |
| 2011/06/14 09:37;16.713 | 121.4907 | 31.25855 | 16.7 | 0.5 | 7 | 54.01 | 10401 | 10113 |
| 2011/06/14 09:37;16.932 | 121.4907 | 31.25855 | 16.7 | 0.5 | 7 | 54.01 | 10401 | 10113 |
| 2011/06/14 09:37;17.155 | 121.4907 | 31.25855 | 16.8 | 0.8 | 7 | 45.24 | 10401 | 10113 |
| 2011/06/14 09:37;17.372 | 121.4907 | 31.25855 | 16.8 | 0.8 | 7 | 45.24 | 10401 | 10113 |
| 2011/06/14 09:37;17.575 | 121.4907 | 31.25855 | 16.8 | 0.8 | 7 | 45.24 | 10401 | 10113 |
| 2011/06/14 09:37;17.792 | 121.4907 | 31.25855 | 16.8 | 0.8 | 7 | 45.24 | 10401 | 10113 |
| 2011/06/14 09:37;17.995 | 121.4907 | 31.25855 | 16.8 | 0.8 | 7 | 45.24 | | |
| 2011/06/14 09:37;18.235 | 121.4907 | 31.25855 | 16.8 | 0.31 | 6 | 37.44 | 10401 | 10113 |
| 2011/06/14 09:37;18.452 | 121.4907 | 31.25855 | 16.8 | 0.31 | 6 | 37.44 | 10401 | 10113 |
| 2011/06/14 09:37;18.652 | 121.4907 | 31.25855 | 16.8 | 0.31 | 6 | 37.44 | 10401 | 10113 |
| 2011/06/14 09:37;18.852 | 121.4907 | 31.25855 | 16.8 | 0.31 | 6 | 37.44 | 10401 | 10113 |
| 2011/06/14 09:37;19.055 | 121.4907 | 31.25855 | 16.7 | 0 | 6 | 0 | 10401 | 10113 |
| 2011/06/14 09:37;19.272 | 121.4907 | 31.25855 | 16.7 | 0 | 6 | 0 | 10401 | 10113 |

170

TO FIG. 6B

FIG. 6A

EP 2 952 047 B1

FROM FIG. 6B

| | ACTIVE SET EC/LO | | | ACTIVE SET RNC ID | | | ACTIVE SET RSCP | | | MONITOR SET CELL ID | |
|---|---|---|---|---|---|---|---|---|---|---|---|
| | -6.41 | | | 167 | | | -68.49 | | | 10113 | 10402 |
| | -6.56 | | | 167 | | | -68.47 | | | 10113 | 10402 |
| | -6.88 | | | 167 | | | -68.47 | | | 10113 | 10402 |
| | -7.03 | -8.95 | | 167 | 166 | | -68.78 | -70.7 | | 10402 | |
| | -7.38 | -9.14 | | 167 | 166 | | -69.72 | -71.47 | | 10402 | |
| | -6.85 | -9.37 | | 167 | 166 | | -68.27 | -70.79 | | 10402 | |
| 10402 | -7.30 | -9.20 | -8.79 | 167 | 166 | 167 | -69.30 | -71.20 | -70.79 | | |
| 10402 | -7.29 | -9.37 | -8.91 | 167 | 166 | 167 | -68.96 | -71.04 | -70.57 | | |
| 10402 | -7.22 | -9.13 | -10.27 | 167 | 166 | 167 | -69.30 | -71.71 | -72.86 | | |
| 10402 | -6.41 | -9.04 | -14.66 | 167 | 166 | 167 | -68.16 | -70.79 | -76.41 | | |
| 10402 | -6.01 | -9.66 | -12.35 | 167 | 166 | 167 | -69.25 | -72.91 | -75.60 | | |
| 10402 | -6.02 | -9.16 | -11.32 | 167 | 166 | 167 | -69.11 | -72.24 | -74.40 | | |
| | | | | | | | | | | 11093 | |
| 10402 | -6.07 | -10.38 | -11.04 | 167 | 166 | 167 | -66.49 | -70.79 | -71.46 | | |
| 10402 | -5.83 | -10.23 | -12.62 | 167 | 166 | 167 | -65.66 | -70.07 | -72.45 | | |
| 10402 | -5.88 | -10.86 | -12.22 | 167 | 166 | 167 | -68.88 | -73.86 | -75.22 | | |
| 10402 | -6.75 | -9.34 | -11.65 | 167 | 166 | 167 | -69.09 | -71.67 | -73.98 | | |
| 10402 | -6.95 | -8.63 | -12.25 | 167 | 166 | 167 | -68.45 | -70.13 | -73.75 | | |
| 10402 | -7.17 | -9.54 | -10.00 | 167 | 166 | 167 | -68.92 | -71.29 | -71.75 | | |

FIG. 6B

172

| LONGITUDE | LATITUDE | ACTIVE SET CELL ID | | | MONITOR SET CELL ID | | |
|---|---|---|---|---|---|---|---|
| 121.4715 | 31.21259 | 10463 | | | 10581 | | |
| 121.4716 | 31.21249 | 10581 | 10463 | | 10462 | | |
| 121.4716 | 31.21238 | | | | 10461 | 10173 | 10451 |
| | | | | | | | |
| 121.4716 | 31.21238 | | | | 10461 | 10173 | 10461 |

## FIG. 7

174

| LONGITUDE | LATITUDE | ACTIVE SET CELL ID | | | MONITOR SET CELL ID | | |
|---|---|---|---|---|---|---|---|
| 121.4715 | 31.21259 | 10463 | | | 10581 | | |
| 121.4716 | 31.21249 | 10581 | 10463 | | 10462 | | |
| 121.4716 | 31.21249 | 10581 | 10463 | | 10462 | | |
| 121.4716 | 31.21238 | 10581 | | | 10461 | 10173 | 10461 |
| 121.4716 | 31.21238 | 10581 | 10463 | | 10462 | | |
| 121.4716 | 31.21238 | 10581 | 10463 | | 10462 | | |
| 121.4716 | 31.21238 | 10581 | 10463 | 10462 | | | |
| 121.4716 | 31.21238 | 10463 | | | 10461 | 10173 | 10461 |

## FIG. 8

| DATE AND TIME | LONGITUDE | LATITUDE | ACTIVE SET CELL ID 1 | ACTIVE SET CELL ID 2 | ACTIVE SET CELL ID 3 | ACTIVE SET RSCP 1 | ACTIVE SET RSCP 2 | ACTIVE SET RSCP 3 |
|---|---|---|---|---|---|---|---|---|
| T1 | LON 1 | LAT 1 | C1 | C3 | | -64.07 | -71.60 | |
| T2 | LON 1 | LAT 1 | C1 | C4 | | -67.49 | -76.99 | |
| T3 | LON 1 | LAT 1 | C2 | C3 | C5 | -58.48 | -73.48 | -63.30 |
| T4 | LON 2 | LAT 2 | C2 | C1 | C5 | -56.97 | -65.07 | -74.77 |
| T5 | LON 2 | LAT 2 | C2 | C6 | C5 | -53.41 | -63.17 | -73.07 |
| T6 | LON 2 | LAT 2 | C2 | C1 | C5 | -56.07 | -67.74 | -75.10 |

FIG. 9

| DATE AND TIME | LONGITUDE | LATITUDE | C1 | C2 | C3 | C4 | C5 | C6 |
|---|---|---|---|---|---|---|---|---|
| T1 | LON 1 | LAT 1 | -64.07 | NaN | -71.60 | NaN | NaN | NaN |
| T2 | LON 1 | LAT 1 | -67.49 | NaN | NaN | -76.99 | NaN | NaN |
| T3 | LON 1 | LAT 1 | NaN | -58.48 | -73.48 | NaN | -63.30 | NaN |
| T4 | LON 2 | LAT 2 | -65.07 | -56.97 | NaN | NaN | -74.77 | NaN |
| T5 | LON 2 | LAT 2 | NaN | -53.41 | NaN | NaN | -73.07 | -63.17 |
| T6 | LON 2 | LAT 2 | -67.74 | -56.07 | NaN | NaN | -75.10 | NaN |

FIG. 10

EP 2 952 047 B1

180

| LONGITUDE | LATITUDE | C1 | C2 | C3 | C4 | C5 | C6 |
|-----------|----------|---------|--------|--------|-----|--------|-----|
| LON 1 | LAT 1 | -65.78 | NaN | -72.54 | NaN | NaN | NaN |
| LON 1 | LAT 1 | -66.405 | -55.48 | NaN | NaN | -74.31 | NaN |

FIG. 11

FIG. 12

DENSITY

214

SEGMENT 2

OPTIMIZE SEGMENT
DESIGN AND FINGERPRINT
CHARACTERIZATION

216

SEGMENT 1

212

SIGNAL STRENGTH

DENSITY

SEGMENT 1     SEGMENT 2

220          222

SIGNAL STRENGTH

218

**FIG. 13**

240

244 — ASSIGN SEGMENT IN
ACCORDANCE WITH
UNASSIGNED RECORDS

245 — ASSIGN RECORDS
TO SEGMENT

ASSIGN FIRST SEGMENT IN
ACCORDANCE WITH STARTING POINT

242

ARE THERE
UNASSIGNED
RECORDS?

246

YES

NO

248 — SEGMENTATION COMPLETE

**FIG. 15**

FIG. 14

250

252

ARE MORE
THAN HALF OF THE RSCP
VALUES IN SEGMENT
NaN?

NO

YES

256 — FINGERPRINT = NaN

254 — FINGERPRINT = AVERAGE OF
RSCP VALUES THAT ARE NOT NaN

ARE THERE
MORE SEGMENTS
?

YES

GO TO NEXT
SEGMENT

258

NO

260 — DONE

262

**FIG. 16**

290

291 — CONVERT MEASUREMENT
REPORTS TO VECTOR FORMAT

292 — COMPUTE DISTANCE
BETWEEN MEASUREMENT
REPORT AND FINGERPRINTS

294 — CHOOSE SEGMENT

ARE THERE
MORE MEASUREMENT
REPORTS?

YES

300

NO

302 — DONE

**FIG. 17**

310

MAPPING

$$\begin{pmatrix} obs(\bar{x}_1) \\ obs(\bar{x}_2) \\ \vdots \\ obs(\bar{x}_K) \end{pmatrix} \rightarrow \begin{pmatrix} p(1) \\ p(2) \\ \circ \\ \circ \\ p(B) \end{pmatrix}$$

FOR EXAMPLE...

$$\begin{pmatrix} p(1) \\ p(2) \\ \circ \\ \circ \\ p(B) \end{pmatrix} = \begin{bmatrix} w_{1,\bar{x}_1} & w_{1,\bar{x}_2} & \circ\circ\circ & w_{1,\bar{x}_K} \\ w_{2,\bar{x}_1} & w_{2,\bar{x}_2} & \circ\circ\circ & w_{2,\bar{x}_K} \\ \circ & \circ & & \circ \\ \circ & \circ & & \circ \\ w_{B,\bar{x}_1} & w_{B,\bar{x}_2} & \circ\circ\circ & w_{B,\bar{x}_K} \end{bmatrix} \begin{pmatrix} obs(\bar{x}_1) \\ obs(\bar{x}_2) \\ \circ \\ \circ \\ obs(\bar{x}_K) \end{pmatrix}$$

$$\underbrace{\hspace{6cm}}_{W}$$

FIG. 18

320

| OBSERVATION x → | COMPUTE w(1,x) | ACCRUE TO BIN 1 → | p(1) |
| | COMPUTE w(2,x) | ACCRUE TO BIN 2 → | p(2) |
| | COMPUTE w(,x) | → | ○ |
| | COMPUTE w(,x) | → | ○ |
| | COMPUTE w(,x) | → | ○ |
| | COMPUTE w(B-1,x) | ACCRUE TO BIN B-1 → | p(B-1) |
| | COMPUTE w(B,x) | ACCRUE TO BIN B → | p(B-) |

REPEAT FOR NEXT OBSERVATION x ←

FIG. 19

FIG. 20

FIG. 21

31

270

274

CPU

278

MASS
STORAGE

NETWORK

NETWORK
INTERFACE

284

276

MEMORY

VIDEO
ADAPTER

DISPLAY

280

I/O
INTERFACE

MOUSE/
KEYBOARD/
PRINTER

288

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2013035109 A1
- US 2005122252 A1

- US 8385943 B1

### Non-patent literature cited in the description

- Using GSM CellID Positioning for Place Discovering. **F. MENESES ; A. MOREIRA.** Pervasive Health Conference and Workshops. IEEE, 2006, 1-8